# EUROPEAN PATENT APPLICATION

(11) **EP 0 700 200 A2**
(43) Date of publication of application: **06.03.1996**
(21) Application number: 95304905.3
(22) Date of filing: 13.07.1995
(51) Int. Cl.: H04N 5/18

(54) **Video sync tip clamp circuit**

(30) Priority: 30.08.1994 GB 9417418; 13.06.1995 GB 9511959
(71) Applicant: PLESSEY SEMICONDUCTORS LIMITED, Swindon, Wiltshire SN2 2QW (GB)
(72) Inventor: Carroll, Sarah Joanne, Leyland, Lancashire, PR5 2BD (GB)
(74) Representative: Burrington, Alan

(57) **Abstract**

In a video sync tip clamp circuit having a section (A) defining an input voltage and a section (B) defining a reference voltage there is provided a feedback section (C) interconnecting the input and reference sections and operating to maintain the input voltage at substantially the same level as the reference voltage.

## Description

The present invention relates to semiconductor circuits and more particularly to a semiconductor video sync clamp circuit for incorporation in a video modulator.

The invention has particular application in a multi-standard video modulator which up-converts a baseband video signal with separate audio frequency input onto a VHF or UHF carrier. The rf signals are provided with negative or positive video modulation and an amplitude or frequency modulated sound sub-carrier to satisfy both PAL and SECAM applications.

The sync tip clamp circuitry forms the input to the video modulator, its purpose being to clamp the tip of the sync of the video signal to a particular voltage which is defined within the clamp circuit by a reference voltage.

The incoming video signal is a.c. coupled into the input of the clamp circuitry via a capacitor. The clamping network is only active when the video signal is negative, i.e. throughout the synchronisation pulse. During this time, current from the input is fed into the capacitor thus charging it up and clamping the sync tip of the video signal to a specific level which is defined by a resistor chain.

It has been found that there are problems with this arrangement. More specifically there is the subjective problem that the DC offset is a function of input signal mark space ratio (sync) and more significantly a function of temperature. The change in DC offset over temperature manifests itself as RF modulation depth variation.

Research was carried out in order to ascertain the cause of the above mentioned subjective problem and it revealed that in operation there was a mismatch between the actual voltage of the clamp and that of the reference voltage. In fact the incoming signal was being clamped at a lower voltage than that intended. This in turn produced a d.c. offset which caused the problem referred to earlier. The above mentioned error in the clamp point was due to the asymmetric nature of the incoming video signal.

According to the present invention there is provided a feedback arrangement between the clamping circuit and the reference voltage circuit operable to ensure that the clamp voltage is maintained at substantially the same value as the reference voltage.

How the invention may be carried out will now be described by way of example only and with reference to the accompanying drawings in which:
Figure 1 is a block schematic diagram showing a video modulator in which the present invention may be incorporated; and
Figure 2 is a circuit diagram of a video sync tip clamp circuit according to the present invention.

### Figure 1

This figure shows diagrammatically in block form a video modulator into which a sync tip clamp circuit according to the present invention may be incorporated, although the present invention is not limited to this particular application.

The clamp circuit is indicated at 1 a video signal 2 being a.c. coupled into the input of the clamp circuit 1 through a capacitor 3 which typically could have a value of 680 nF, depending upon video specifications.

The clamping circuit 1 is only active when the video signal 2 is negative, i.e. throughout the synchronisation pass. During this time, current from the input transistor (not shown) is fed into the capacitor 3 thus charging it up and clamping the sync tip of the video to a specific level which is defined by a resistor chain 4.

The output of the clamp circuit 1 is fed to an automatic gain control circuit 5 and also to a white clip circuit 6, the relationship between the automatic gain control circuit 5 and the white clip circuit 6 and the construction of the latter is the subject of our co-pending application 9417414.

The output from the automatic gain control 5 and the white clip circuit 6 feeds into a UHF section which is illustrated diagrammatically at 7. The composition of the UHF section 7 will not be described as it is not relevant to the present invention.

The UHF section 7 has a sub-carrier input 8 and a further input from a sound section diagrammatically illustrated at 9. Again the details of the sound section will not be described as they form no part of the present invention. The sound section 9 has an audio input 10.

The UHF section 7 has outputs 11.

### Figure 2

This figure shows one embodiment of the sync tip clamp circuit 1 incorporating the present invention.

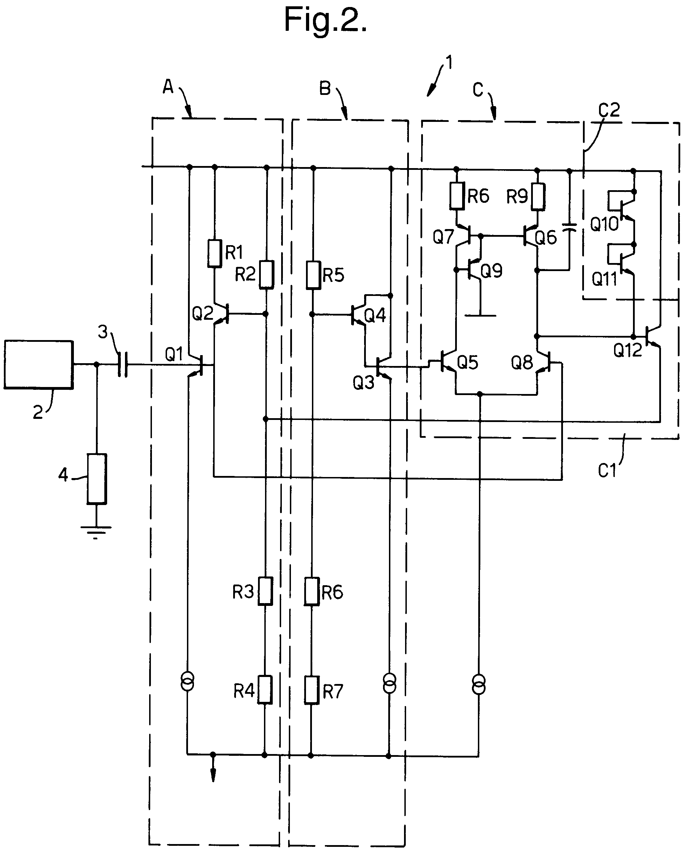

The clamp circuit shown in Figure 2 consists essentially of three sections. The first section, indicated by the dotted boundary A and being concerned with the variable input current, the second section indicated by the dotted boundary B and being concerned with the provision of the reference current and the third section indicated by the dotted boundary C being concerned with the negative feedback circuit provided by the present invention.

The feedback circuit C can itself be considered to consist of two sections C1 and C2, the section C1 consisting essentially of a comparator comprising a long-tailed pair of transistors and the second section C2 being to bias the comparator to ensure that it is only active when the sync is present i.e. when the video signal is negative.

The combination of the sections A and B is known from the prior art. The invention consists in providing the active high gain feedback circuit C which functions to match the varying current/voltage of section A with the reference current/voltage determined by section B.

The circuit shown in Figure 2 will now be described in more detail.

The clamping circuitry shown in Figure 2 is only active for 4.7µS out of a total period of the video signal of 64µS. During the sync section of the video waveform the base of a first transistor Q1 goes negative and current is directed into the capacitor 3 to charge it up. As a result, the d.c. voltage at which the video waveform sits is increased. After a sufficient number of 64µS cycles the sync tip should sit at the same potential as the reference voltage.

The reference voltage is defined by the chain of three resistors R5, R6 and R7 located in section B. However, as pointed out earlier, due to the asymmetrical nature, i.e. the mark/space ratio, of the video signal a d.c. offset between the actual sync tip voltage and that of the reference voltage results.

The offset is due to the current flowing through transistor Q2, when the clamp circuit is active, being larger than the current through transistor Q4, which is the equivalent transistor in the reference voltage section B.

As a result the base emitter voltage, Vbe of transistor Q2 will be greater than that of transistor Q4. Consequently when the clamping circuitry is active the actual voltage on the base of the transistor Q1 will be slightly lower than that expected, thus resulting in a d.c. offset.

In order to solve this problem the present invention provides an active high gain feedback circuit C which functions to maintain the voltage on the base of the transistor Q1 at the desired reference level by reducing the d.c. offset.

As indicated earlier the feedback arrangement C consists of a comparator section C1 and this measures the difference in voltage level between the reference voltage and that of the clamped sync tip.

As indicated earlier the comparator C1 consists essentially of a long-tailed pair of transistors Q5 and Q6. These together with transistors Q7, Q8 and Q9, which form a pnp current mirror, together comprise a very high gain amplifier.

The DC offset measured between the bases of transistors Q5 and Q6 is amplified by the use of an active load. The active load in this case is formed by a current mirror circuit known in the art, formed by Q6, Q7 and Q9. Input voltage differences between Q5 and Q6 cause nett current flow into the base of Q12 which is in turn amplified by the current gain of Q12.

The second part of the feedback arrangement C i.e. C2 comprises two further transistors Q10 and Q11 whose function is to bias the comparator circuit C1.

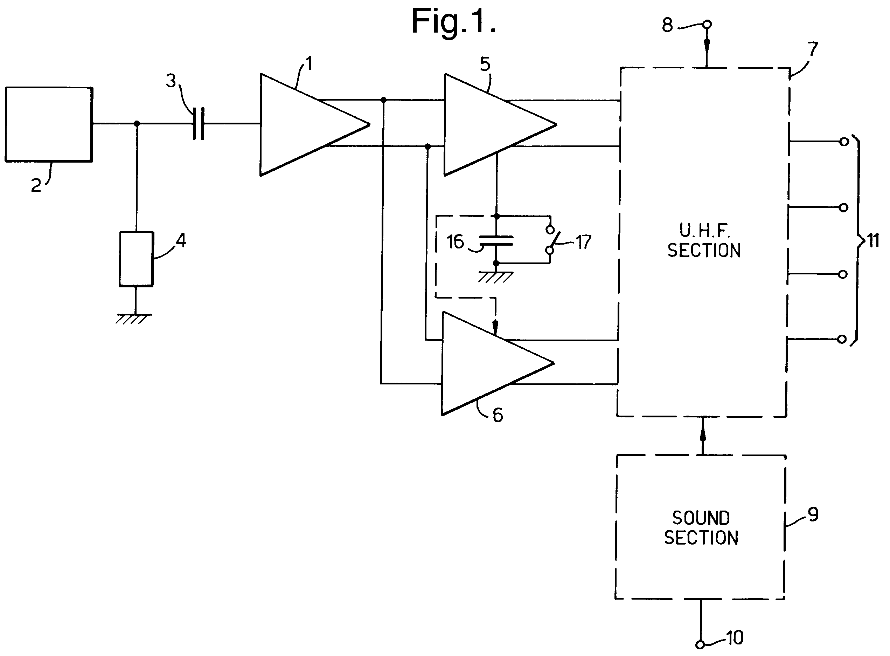

The major advantage of the feedback arrangement described above with reference to Figure 2 is that the sync tip level is accurately defined at the input to the video modulator shown in Figure 1. In addition the feedback arrangement reduces the time taken to charge the capacitor 3 because a much larger current flows into it during the first few cycles.

The purpose of resistor R1 connected to the collector of a transistor Q2 is to limit the current that is fed back so as to protect the transistor Q2.

Although a specific feedback circuit has been described in connection with section C of Figure 2 the present inventive concept would extend to variations to this circuitry.

## Claims

1. In a video sync tip clamp circuit having a section defining an input voltage and a section defining a reference voltage there is provided a feedback section interconnecting the input and reference sections and operating to maintain the input voltage at substantially the same level as the reference voltage.

2. A circuit as claimed in Claim 1 in which the feedback section comprises a comparator section and a biasing section, the comparator section only being active when the input video signal is negative with respect to the reference voltage.

3. A circuit as claimed in Claim 2 in which the comparator section comprises a high gain amplifier.

4. A circuit as claimed in Claim 3 in which the high gain amplifier comprises a long-tailed pair of transistors together with an active load formed by a PNP current mirror.

5. A circuit as claimed in either Claim 3 or Claim 4 in which the biasing section comprises a pair of diodes.

6. A circuit substantially as hereinbefore described with reference to and as shown in Figure 2 of the accompanying drawing.
